(19) Europäisches Patentamt European Patent Office Office européen des brevets

(11) **EP 2 840 843 A1**

(12) **EUROPEAN PATENT APPLICATION**
published in accordance with Art. 153(4) EPC

(43) Date of publication:
25.02.2015 Bulletin 2015/09

(51) Int Cl.:
*H04W 56/00* (2009.01)

(21) Application number: 13788314.6

(22) Date of filing: 04.02.2013

(86) International application number:
PCT/CN2013/071311

(87) International publication number:
WO 2013/166872 (14.11.2013 Gazette 2013/46)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 10.05.2012 CN 201210144267

(71) Applicant: Huawei Technologies Co., Ltd
Shenzhen, Guangdong 518129 (CN)

(72) Inventors:
• CHEN, Jun
Shenzhen
Guangdong 518129 (CN)
• XU, Wenying
Shenzhen
Guangdong 518129 (CN)
• ZHENG, Xiaoxiao
Shenzhen
Guangdong 518129 (CN)
• MA, Xueli
Shenzhen
Guangdong 518129 (CN)

(74) Representative: Maiwald Patentanwalts GmbH
Elisenhof
Elisenstrasse 3
80335 München (DE)

(54) **DATA BOUNDARY DETERMINING METHOD, INDICATION INFORMATION TRANSMITTING METHOD AND DEVICE THEREOF**

(57) Embodiments of the present invention disclose a data boundary determining method, an indication information sending method, and apparatuses thereof. The boundary determining method includes: acquiring, by a base station in which a non-reference cell locates, timing information of a reference cell, or acquiring, by the base station in which the non-reference cell locates, a parameter used to determine boundary information of a high speed dedicated physical control channel (HS-DPCCH); and determining, by the base station, the boundary information of the HS-DPCCH according to the timing information of the reference cell or the parameter, where the boundary information is used by the base station to search for the HS-DPCCH. The present invention solves a technical problem in the prior art that a base station in which a non-reference cell locates is not capable of finding a correct boundary of the HS-DPCCH and therefore causes a decrease in downlink data transmission performance.

A base station in which a non-reference cell locates acquires timing information of a reference cell, or acquires a parameter used to determine boundary information of a high speed dedicated physical control channel HS-DPCCH — 101

The base station determines the boundary information of the HS-DPCCH according to the timing information of the reference cell or the parameter — 102

FIG. 1

EP 2 840 843 A1

## Description

This application claims priority to Chinese Patent Application No. 201210144267.9, filed with the Chinese Patent Office on May 10, 2012 and entitled "DATA BOUNDARY DETERMINING METHOD, INDICATION INFORMATION SENDING METHOD, AND APPARATUSES THEREOF", which is incorporated herein by reference in its entirety.

## TECHNICAL FIELD

The present invention relates to the field of communications technologies, and in particular, to a data boundary determining method, an indication information sending method, and apparatuses thereof.

## BACKGROUND

With the development of mobile communications technologies, in a universal mobile telecommunications system (UMTS, Universal Mobile Telecommunications System), downlink discontinuous reception (DRX, Discontinuous Reception) and multiflow transmission (Multiflow transmission) are separately introduced. However, a problem that the downlink DRX and the Multiflow transmission coexist is a technical problem to be solved at present.

At present, because a fixed timing relationship exists among different channels, from a perspective of a cell side, a starting point of a high speed dedicated physical control channel (HS-DPCCH, High Speed Dedicated Physial Control Channel) needs to be found so as to receive uplink data; according to protocol specifications, a cell needs to find backwards an HS-DPCCH boundary, which is closest in time of 1280 chips, as a boundary according to a starting point of a high speed shared control channel (HS-SCCH, High Speed Shared Control Channel). An SF-DC feature is used as an example herein. In the SF-DC feature, there are two serving cells having a certain timing difference, and the two serving cells may be in the same base station or different base stations.

In an SF-DC, a UE needs to receive data in two cells in downlink, but in uplink, sending is only required in one cell, and the other cell needs to demodulate the data (for example, in an inter-base station SF-DC scenario); in this way, a user equipment UE (User Equipment) side is required to designate a matching relationship between subframes received by the downlink data.

A reference cell and a secondary cell of the UE may be defined; the reference cell is a cell in which a timing difference between a downlink physical channel HS-PDSCH and an uplink physical channel HS-DPCCH is 19200 chips or 7.5 slots, and the other cell is the secondary cell, or is called a non-reference cell. For example, an HS-SCCH S_DRX=0 in the reference cell of the UE matches an HS-SCCH S_DRX=0 in the non-reference cell of the UE, and then after receiving the two subframes of data, the UE feeds back feedback information of the two subframes on a corresponding HS-DPCCH at the same time, where the HS-DPCCH has a fixed timing relationship with an HS-SCCH.

However, regarding the reference cell, for an HS-SCCH S_DRX=0 data subframe that is scheduled by the reference cell, the reference cell finds an HS-DPCCH S_DRX=0 subframe as a boundary of the HS-SCCH S_DRX=0 data subframe according to "an HS-DPCCH boundary that is closest in time of 1280 chips after a starting point of a CFN_DRX n subframe corresponding to the HS-SCCH" in the protocol specifications. It should be noted that the HS-DPCCH S_DRX=0 subframe does not carry feedback of the HS-SCCH S_DRX=0 subframe, and the feedback needs to be found according to fixed timing. For example, a next HS-DPCCH S_DRX=0 subframe carries feedback information of the HS-SCCH S_DRX=0 subframe.

For a base station in which the non-reference cell locates, a boundary of the HS-DPCCH is also found according to the protocol specifications. However, the non-reference cell finds an HS-DPCCH S_DRX=1 subframe. However, because a UE side receives the HS-SCCH S_DRX=0 of the two cells at the same time, and feeds back by using one HS-DPCCH, inconsistency in understanding of HS-DPCCH information between the UE and the base station in which the non-reference cell locates may be caused (that is, the base station in which the non-reference cell locates incorrectly locates the boundary of the HS-DPCCH), thereby causing a decrease in downlink data transmission performance.

In a process of studying and practicing the prior art, the inventor of the present invention finds a technical problem in an existing implementation manner that for the base station in which the non-reference cell locates may be not capable of finding a correct boundary of the HS-DPCCH, inconsistency in understanding, between the UE and the base station in which the non-reference cell locates, of an uplink HS-DPCCH sent by some piece of downlink data is caused, and as a result, the transmission performance of the downlink data decreases.

## SUMMARY

In embodiments of the present invention, a data boundary determining method, an indication data sending method, and apparatuses thereof are provided to solve a technical problem in the prior art that a base station in which a non-reference cell locates is not capable of finding a correct boundary of an HS-DPCCH, thereby causing a decrease in downlink data transmission performance. To solve the foregoing technical problem, an embodiment of the present invention provides a data boundary determining method, and the method includes: acquiring, by a base station in which a non-reference cell locates, timing information of a reference cell, or acquiring, by a base station in which the non-reference cell locates, a parameter used to determine boundary information of a high speed dedicated physical control channel (HS-DPCCH); and determining, by the base station, the boundary information of the HS-DPCCH according to the timing information of the reference cell or the parameter.

An embodiment of the present invention further provides an indication information sending method, and the method includes: acquiring timing information of a reference cell, or a parameter used to determine boundary information of a high speed dedicated physical control channel (HS-DPCCH); and sending the timing information of the reference cell, or the parameter used to determine the boundary information of the high speed dedicated physical control channel (HS-DPCCH) to a base station in which a non-reference cell locates, so that the base station in which the non-reference cell locates determines the boundary information of the HS-DPCCH.

An embodiment of the present invention further provides a data boundary determining apparatus, and the apparatus includes: an acquiring unit, configured to acquire timing information of a reference cell, or a parameter used to determine boundary information of a high speed dedicated physical control channel (HS-DPCCH); and a determining unit, configured to determine the boundary information of the HS-DPCCH according to the timing information of the reference cell or the parameter.

An embodiment of the present invention further provides an indication information sending apparatus, and the apparatus includes: an acquiring unit, configured to acquire timing information of a reference cell, or a parameter used to determine boundary information of a high speed dedicated physical control channel (HS-DPCCH); and a sending unit, configured to send the timing information of the reference cell or the parameter used to determine the boundary information of the high speed dedicated physical control channel (HS-DPCCH) to a base station in which a non-reference cell locates.

It may be known from the foregoing technical solutions that because the base station in which the non-reference cell locates may acquire the timing information of the reference cell, or the parameter used to determine the boundary information of the high speed dedicated physical control channel (HS-DPCCH), the boundary information of the HS-DPCCH may be correctly located, thereby improving the downlink data transmission performance.

BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.

FIG. 1 is a flowchart of a data boundary determining method according to an embodiment of the present invention;
FIG. 2 is a flowchart of an indication information sending method according to an embodiment of the present invention;
FIG. 3 is a diagram of an application example of a method for determining a data boundary by using DRX timing information according to an embodiment of the present invention;
FIG. 4 is a diagram of an application example of another method for determining a data boundary by using DRX timing information according to an embodiment of the present invention;
FIG. 5 is a schematic structural diagram of a data boundary determining apparatus according to an embodiment of the present invention;
FIG. 6 is a second schematic structural diagram of a data boundary determining apparatus according to an embodiment of the present invention;
FIG. 7 is a third schematic structural diagram of a data boundary determining apparatus according to an embodiment of the present invention;
FIG. 8 is a fourth schematic structural diagram of a data boundary determining apparatus according to an embodiment of the present invention;
FIG. 9 is a fifth schematic structural diagram of a data boundary determining apparatus according to an embodiment of the present invention; and
FIG. 10 is a schematic structural diagram of an indication information sending apparatus according to an embodiment of the present invention.

DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention. In all embodiments of the present invention, a reference cell is a timing reference cell; a non-reference cell is a non-timing reference cell; a base station in which the reference cell locates is a base station in which the timing reference cell locates; and a base station in which the non-reference cell locates is a base station in which the non-timing reference cell locates. Among those, the base station in which the timing reference cell locates and the base station in which the non-timing reference cell locates are different base stations.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In embodiments of the present invention, a cell (a base station) that serves a UE is defined as the base station in which the reference cell locates and the base station in which a non-reference cell locates (that is, a base station in which a secondary cell locates), where the reference cell is a cell in which a timing difference between a downlink physical channel HS-PDCSH of the UE and an uplink physical channel HS-DPCCH is 19200 chips or 7.5 slots, and all other cells except the reference cell may be non-reference cells. If an HS-SCCH S_DRX=0 subframe in the reference cell of the UE matches an HS-SCCH S_DRX=0 subframe in a non-reference cell of the UE, after receiving the two subframes of data, the UE feeds back feedback information of the two subframes on a corresponding HS-DPCCH at the same time, where the HS-DPCCH has a fixed timing relationship with an HS-SCCH.

In the embodiments, the UE may be any one of the following, and the UE may be stationary or mobile a stationary UE may specifically be a terminal (terminal), a mobile station (mobile station), a subscriber unit (subscriber unit), a station (station), or the like, and a mobile UE may specifically be a cellular phone (cellular phone), a personal digital assistant (PDA, personal digital assistant), a wireless modem (modem), a wireless communication device, a handheld (handheld), a laptop computer (laptop computer), a cordless phone (cordless phone), a wireless local loop (WLL, wireless local loop) station, or the like; and the foregoing UE may be distributed across a whole radio network.

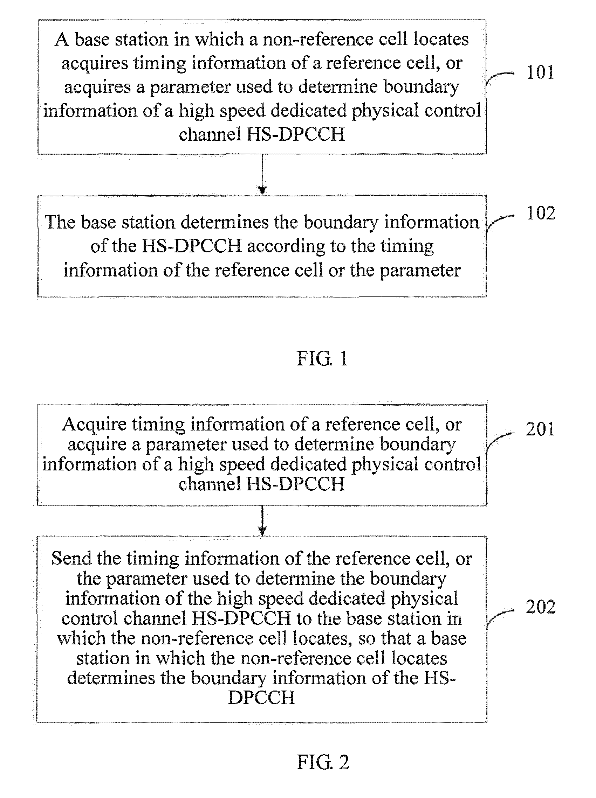

Referring to FIG. 1, FIG. 1 is a flowchart of a data boundary determining method according to an embodiment of the present invention; and the method includes:

101. A base station in which a non-reference cell locates acquires timing information of a reference cell, or a parameter used to determine boundary information of a high speed dedicated physical control channel (HS-DPCCH).

In this step, there are a plurality of acquiring manners, including active requesting and passive receiving. For example, the base station in which the non-reference cell locates receives the timing information of the reference cell or the parameter used to determine the boundary information of the HS-DPCCH, which are sent by a network; or the base station in which the non-reference cell locates sends, to a network, a request for acquiring the timing information of the reference cell or the parameter used to determine the boundary information of the HS-DPCCH, and receives a response that includes the timing information of the reference cell or the parameter used to determine the boundary information of the HS-DPCCH, which are sent by the network.

102. The base station in which the non-reference cell locates determines the boundary information of the HS-DPCCH according to the timing information of the reference cell or the parameter.

In this embodiment of the present invention, because the base station in which the non-reference cell locates may obtain the timing information of the reference cell, or the parameter used to determine the boundary information of the high speed dedicated physical control channel (HS-DPCCH), the boundary information of the HS-DPCCH may be correctly located, thereby improving downlink data transmission performance.

In the foregoing embodiment, in 101, if the acquired timing information of the reference cell, or the acquired parameter used to determine the boundary information of the high speed dedicated physical control channel (HS-DPCCH), is different, a manner in which the base station in which the non-reference cell locates determines the boundary information of the HS-DPCCH is also different. Details are described in the following embodiment.

Optionally, in the foregoing embodiment, if the timing information of the reference cell includes downlink discontinuous reception (DRX) timing information ($\tau_{DRX1}$) of the reference cell, where the DRX timing information is a timing deviation between a fractional dedicated physical channel (F-DPCH) and a high speed shared control channel (HS-SCCH), determining, by the base station in which the non-reference cell locates, the boundary information of the HS-DPCCH according to the timing information of the reference cell specifically includes: searching, by the base station in which the non-reference cell locates, for a boundary of the HS-SCCH according to an F-DPCH corresponding to the $\tau_{DRX1}$ of the reference cell; and using, by the base station in which the non-reference cell locates, the found boundary of the HS-SCCH as a starting point, and according to protocol specifications, determining, by the base station in which the non-reference cell locates, boundary information of an HS-DPCCH that is closest in time of 1280 chips after a starting point of a CFN_DRX n subframe corresponding to the HS-SCCH as the boundary information of the HS-DPCCH. A specific searching and determining method is a technology well known by a person skilled in the art, and details are not described herein again.

Optionally, in the foregoing embodiment, if the parameter used to determine the boundary information of the HS-DPCCH includes a DRX timing information difference $\Delta\tau_{DRX}$ between the reference cell and the non-reference cell, determining, by the non-reference cell, the boundary information of the HS-DPCCH according to the parameter specifically includes: performing, by the non-reference cell, computation according to the $\Delta\tau_{DRX}$ and DRX timing information $\tau_{DRX2}$ of itself to obtain the DRX timing information $\tau_{DRX1}$ of the reference cell, for example, according to a formula: $\Delta\tau_{DRX}=\tau_{DRX2}-\tau_{DRX1}$, and the like; finding, by the non-reference cell, boundary information of the HS-SCCH according to the F-DPCH corresponding to the $\tau_{DRX1}$ of the reference cell; and according to the protocol specifications, using, by the base station in which the non-reference cell locates, the found boundary of the HS-SCCH as a starting point, and determining, by the base station in which the non-reference cell locates, the boundary information of the HS-DPCCH that is closest in time of the 1280 chips after the starting point of the CFN_DRX n subframe corresponding to the HS-SCCH as the boundary information of the HS-DPCCH.

In another embodiment of the present invention, the base station in which the non-reference cell locates obtains the boundary information of the HS-SCCH according to a formula

$$5*CFN\_DRX+ S\_DRX+ 1-\left\lceil \frac{\frac{\Delta\tau_{DRX}}{2560}+1.5}{3} \right\rceil,$$

where the symbol $\lceil \ \rceil$ means to round up to a next integer, the CFN_DRX is a connection frame number in a discontinuous reception state (Connection Frame Number_Discontinuous Reception), the S_DRX is a subframe number in the discontinuous reception state (Sub Frame Number_Discontinuous Reception), the CFN_DRX and the S_DRX both are values of an HS-DPCCH of the non-reference cell and/or that of an HS-SCCH of the non-reference cell before correction, and the $1-\left\lceil \dfrac{\frac{\Delta\tau_{DRX}}{2560}+1.5}{3} \right\rceil$ is a subframe offset of discontinuous reception.

Optionally, in this embodiment, if the parameter used to determine the boundary information of the HS-DPCCH includes an offset DRX_OFFSET of downlink discontinuous reception of the reference cell, determining, by the base station in which the non-reference cell locates, the boundary information of the HS-DPCCH according to the parameter specifically includes: obtaining, by the base station in which the non-reference cell locates, the boundary information of the HS-DPCCH according to a formula 5*CFN_DRX+S_DRX+DRX_OFFSET, where the CFN_DRX is the connection frame number in the discontinuous reception state, the S_DRX is the subframe number in the discontinuous reception state, and the DRX_OFFSET is the offset of discontinuous reception.

Optionally, in this embodiment, if parameter used to determine the boundary information of the HS-DPCCH includes a timing relationship (that is, an m value) between an uplink dedicated physical control channel DPCCH of the reference cell and an uplink HS-DPCCH of the reference cell, where the timing relationship between the uplink DPCCH and the uplink HS-DPCCH is: a timing difference between an uplink DPCCH sending boundary corresponding to a designated downlink HS-SCCH subframe and an HS-DPCCH boundary that is fed back for the HS-SCCH, or a timing difference between the uplink DPCCH and the HS-DPCCH that are sent for a piece of HS-SCCH data, and then determining, by the base station in which the non-reference cell locates, the boundary information of the HS-DPCCH according to the parameter specifically includes: performing, by the base station in which the non-reference cell locates, detection on the timing difference between the uplink DPCCH sending boundary corresponding to the designated downlink HS-SCCH subframe and the HS-DPCCH boundary that is fed back for the HS-SCCH, or on the timing difference between the uplink DPCCH and the HS-DPCCH that are sent for a piece of HS-SCCH data to obtain the boundary information of the HS-DPCCH.

Optionally, in this embodiment, if the parameter used to determine the boundary information of the HS-DPCCH includes m difference information $\Delta m$ between the reference cell and the non-reference cell, determining, by the base station in which the non-reference cell locates, the boundary information of the HS-DPCCH according to the parameter is as follows:

First, the base station in which the non-reference cell locates obtains the $\tau_{DRX1}$ of the reference cell according to formulas $256*\Delta m=\Delta\tau_{DRX}$ and $\Delta\tau_{DRX}=\Delta\tau_{DRX2}$ of the non-reference cell - $\tau_{DRX1}$ of the reference cell; then, the base station in which the non-reference cell locates finds the boundary information of the HS-SCCH according to the F-DPCH

corresponding to the $\tau_{DRX1}$ of the reference cell; and finally, the base station in which the non-reference cell locates uses the found boundary of the HS-SCCH as a starting point, and determines the boundary information of the HS-DPCCH that is closest in time of the 1280 chips after the starting point of the CFN_DRX n subframe corresponding to the HS-SCCH as the boundary information of the HS-DPCCH.

Certainly, in the foregoing embodiment, the parameter used to determine discontinuous reception timing information may also include one type or more than one type of the above, which is not limited in this embodiment. When more than one type is included, a manner of determining the boundary information of the HS-DPCCH is determined according to a corresponding manner; for details, reference may be made to the description above, and details are not described herein again.

Referring to FIG. 2, FIG. 2 is a flowchart of an indication information sending method according to an embodiment of the present invention; and the method includes:

201. Acquire timing information of a reference cell, or a parameter used to determine boundary information of a high speed dedicated physical control channel (HS-DPCCH).

In this step, there are a plurality of acquiring manners of a radio network controller (RNC) in a network. For example, when the RNC in the network configures multiflow transmission for a user equipment, the RNC receives the timing information or the parameter used to determine the boundary information of the high speed dedicated physical control channel (HS-DPCCH), which are sent by a base station in which the reference cell locates; or the RNC in the network sends, to the base station in which the reference cell locates, a request for acquiring the timing information of the reference cell or the parameter used to determine the boundary information of the high speed dedicated physical control channel (HS-DPCCH), and receives a response that includes the timing information of the reference cell or the parameter used to determine the boundary information of the high speed dedicated physical control channel (HS-DPCCH), which are sent by the base station in which the reference cell locates.

In this embodiment, the timing information of the reference cell includes discontinuous reception DRX timing information but is not limit to the discontinuous reception DRX timing information. Other timing information may also be included.

The parameter used to determine the boundary information of the high speed dedicated physical control channel (HS-DPCCH) includes at least one of the following: a DRX timing information difference $\Delta\tau_{DRX}$ between the reference cell and a non-reference cell; or an offset DRX_OFFSET of discontinuous reception of the reference cell; or a timing relationship between an uplink dedicated physical control channel DPCCH of the reference cell and an uplink HS-DPCCH of the reference cell; or m difference information $\Delta m$ between the reference cell and the non-reference cell. However, the parameter is not limited to the $\Delta\tau_{DRX}$, the DRX_OFFSET, the timing relationship, and the $\Delta m$; and another parameter used to determine the boundary information of the high speed dedicated physical control channel (HS-DPCCH) may also be included.

Optionally, the offset DRX_OFFSET of discontinuous reception of the reference cell is obtained by the network through computation by using a formula $1 - \left\lceil \dfrac{\dfrac{\Delta\tau_{DRX}}{2560} + 1.5}{3} \right\rceil$, where the $\Delta\tau_{DRX}$ is the DRX timing information difference between the reference cell and the non-reference cell.

202. Send the timing information of the reference cell, or the parameter used to determine the boundary information of the high speed dedicated physical control channel (HS-DPCCH) to a base station in which the non-reference cell locates, so that the base station in which the non-reference cell locates determines the boundary information of the HS-DPCCH.

In this step, there are a plurality of manners in which the RNC sends to the base station in which the non-reference cell locates, if only a sent message includes the timing information of the reference cell or the parameter used to determine the boundary information of the high speed dedicated physical control channel (HS-DPCCH).

For ease of understanding by a person skilled in the art, the following is described with reference to a specific application example.

In one type of embodiment, that the RNC acquires the DRX timing information of the reference cell is used as an example.

First, the RNC acquires the DRX timing information (that is, the $\Delta\tau_{DRX1}$) of the reference cell from the reference cell; the acquiring manner may be active requesting or passive receiving, which is not limited in this embodiment. The DRX timing information is defined as a timing deviation between an F-DPCH and an HS-SCCH, and in this embodiment, units of $\tau_{DRX1}$, $\tau_{DRX2}$, and the $\Delta\tau_{DRX}$ are all chip.

In this embodiment, the reference cell may report DRX timing information to the RNC every time the RNC configures the multiflow transmission (Multiflow) for the UE, and the DRX timing information may be reported periodically or in real time; certainly, the reference cell may also inform the RNC of the DRX timing information of the reference cell only when the RNC requires reporting. Because channel timing is maintained between a cell (a base station) and the UE and accompanied by a cell clock drift, an air interface transmission delay change, and other factors, this type of DRX timing information may change with time; therefore, in this embodiment, an RNC side further needs to update the acquired DRX timing information in time.

Then, the RNC informs the base station in which the non-reference cell locates of the DRX timing information of the reference cell.

Finally, the base station in which the non-reference cell locates determines the boundary information of the HS-DPCCH according to the DRX timing information of the reference cell.

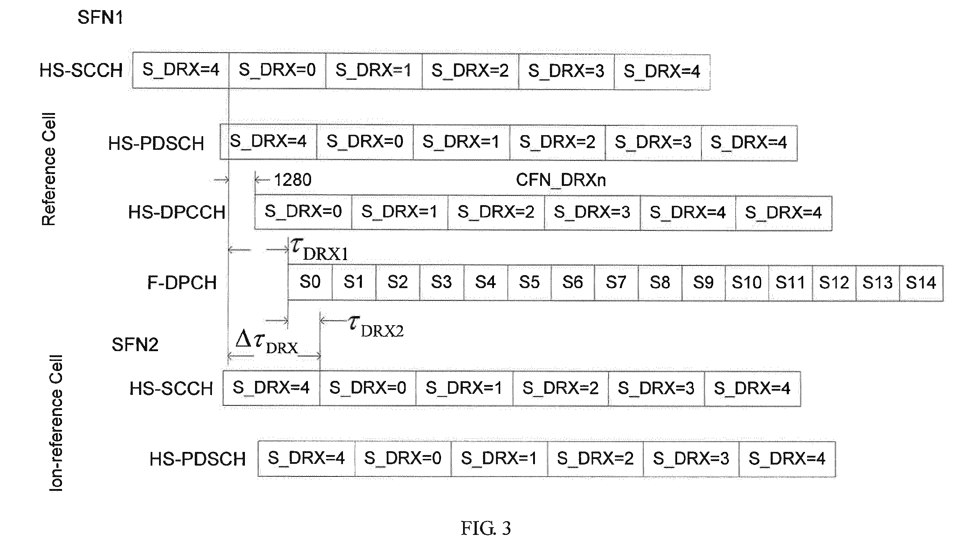

That is, after learning the DRX timing information of the reference cell, the base station in which the non-reference cell locates first finds a boundary of the HS-SCCH according to the F-DPCH corresponding to the $\tau_{DRX1}$ of the reference cell, as shown in FIG. 3, and FIG. 3 is a diagram of an application example of a method for determining a data boundary by using DRX timing information according to an embodiment of the present invention. It should be noted that "boundary information of the HS-SCCH" in this embodiment may be used by the base station in which the non-reference cell locates to search for HS-DPCCH timing, and may be further used for downlink data transmission scheduling.

Then, the base station in which the non-reference cell locates determines information about an HS-DPCCH boundary that is closest in time of 1280 chips after a starting point of a CFN_DRX n subframe corresponding to the HS-SCCH as the boundary information of the HS-DPCCH; and as a result, it can be ensured that the base station in which the reference cell locates and the base station in which the non-reference cell locates find the same boundary of the HS-DPCCH. A specific searching process is a technology well known by a person skilled in the art, and details are not described herein again.

In another embodiment, an example, in which a network informs the base station in which the non-reference cell locates of the DRX timing information difference $\Delta\tau_{DRX}$ between the reference cell and the non-reference cell, is used.

First, the network informs the base station in which the non-reference cell locates of the DRX timing information difference $\Delta\tau_{DRX}=\tau_{DRX2}-\tau_{DRX1}$ (in unit of chip) of the reference cell; it should be noted that the $\tau_{DRX}$ may be positive or negative; and as shown in FIG. 3, the $\tau_{DRX1}$ in the figure is a negative value, because the F-DPCH is after the corresponding HS-SCCH timing, and the $\tau_{DRX2}$ is a positive value, because the F-DPCH is before the corresponding HS-SCCH timing.

Then, the base station in which the non-reference cell locates performs computation according to the $\Delta\tau_{DRX}$ and the DRX timing information $\tau_{DRX2}$ of itself to obtain the DRX timing information $\tau_{DRX1}$ of the reference cell.

After that, the base station in which the non-reference cell locates finds the boundary of the HS-SCCH according to the F-DPCH corresponding to the $\tau_{DRX1}$ of the reference cell.

As shown in FIG. 3, "the boundary of the HS-SCCH" in this embodiment may be used by the base station in which the non-reference cell locates to search for the HS-DPCCH timing, and may be further used for the downlink data transmission scheduling. Then, the base station in which the non-reference cell locates finds the boundary of the HS-DPCCH according to the rule "the information about the HS-DPCCH boundary that is closest in time of the 1280 chips after the starting point of the CFN_DRX n subframe corresponding to the HS-SCCH" in the protocol; and as a result, it can be ensured that the base station in which the reference cell locates and the base station in which the non-reference cell locates find the same boundary of the HS-DPCCH.

In FIG. 3, the DRX timing information of the base station in which the reference cell locates is the $\tau_{DRX1}$, and the DRX timing information of the base station in which the non-reference cell locates is the $\tau_{DRX2}$. The base station in which the non-reference cell locates first finds an S_DRX=0, and then finds a corresponding start boundary of the F-DPCH. According to the foregoing process, the base station in which the non-reference cell locates may obtain the DRX timing information $\tau_{DRX1}$ of the reference cell according to the $\tau_{DRX2}$ and the $\Delta\tau_{DRX}$. It may be seen from the figure that the base station in which the non-reference cell locates may find, according to a timing rule of the HS-SCCH and the HS-DPCCH that is defined in the protocol, that an HS-DPCCH subframe corresponding to the S_DRX=0 is an S_DRX=0; and in this way, it can be ensured that the base station in which the reference cell locates and the base station in which the non-reference cell locates have a same understanding in a subframe matching relationship between the HS-SCCH and the HS-DPCCH.

In another type of embodiment, the RNC in the network still informs the base station in which the non-reference cell locates of the DRX timing information difference $\Delta\tau_{DRX}=\tau_{DRX2}-\tau_{DRX1}$ of the reference cell. However, a manner in which the base station in which the non-reference cell locates determines the boundary of the HS-DPCCH and/or the boundary of the HS-SCCH is different, and specifically is:

the base station in which the non-reference cell locates determines the boundary of the HS-DPCCH by using a formula:

$$5*CFN\_DRX + S\_DRX + \left\lceil 1 - \left\lceil \frac{\frac{\Delta\tau_{DRX}}{2560} + 1.5}{3} \right\rceil \right\rceil,$$

The symbol ⌈ ⌉ in the formula means to round up to a next integer; for example, if a value in the symbol is 0.5, a computation result is 1, if the value in the symbol is 1.5, the computation result is 2, and the rest can be deduced from this; the $1 - \left\lceil \dfrac{\frac{\Delta\tau_{DRX}}{2560} + 1.5}{3} \right\rceil$ is a subframe offset of discontinuous reception; the CFN_DRX represents a connection frame number in a discontinuous reception state; the S_DRX represents a subframe number in the discontinuous reception state; and the CFN_DRX and the S_DRX both are values of an HS-DPCCH of the non-reference cell and/or that of an HS-SCCH of the non-reference cell before correction.

In this embodiment, the forgoing formulas are mainly used to determine a boundary of a channel, and the following formulas are mainly used by a NodeB to determine feedback information of the UE (that is, a location of a CQI).

At this time, time for the HS-DPCCH to send the channel quality indicator (CQI, Channel Quality Indicator) is:

$$\left((5*CFN\_DRX - UE\_DTX\_DRX\_Offset + S\_DRX + \left\lceil 1 - \left\lceil \frac{\frac{\Delta\tau_{DRX}}{2560} + 1.5}{3} \right\rceil \right\rceil \right) \text{ MOD } k') =$$

$$0, \text{ with } k' = k/(2ms),$$

where

the k' is the number of subframes that is corresponding to a DRX period; the CFN_DRX is the connection frame number in the discontinuous reception state; the UE_DTX_DRX_Offset is an offset of discontinuous transmission and discontinuous reception of the user equipment; the S_DRX is the subframe number in the discontinuous reception state; and the MOD is a modulus operation.

Further, when multiple-input multiple-output (MIMO, Multiple-Input Multiple-Output) is further configured on the network, and under a premise that the foregoing formulas are met, if the network further meets the following formula:

$$\left\lfloor \frac{5 \times CFN\_DRX - UE\_DTX\_DRX\_Offset + S\_DRX + 1 - \left\lceil \frac{\frac{\Delta\tau_{DRX}}{2560} + 1.5}{3} \right\rceil}{k'} \right\rfloor \bmod M\_cqi < N\_cqi\_typeA$$

the UE needs to sent a type A channel quality indicator (type A CQI, type A Channel Quality Indicator). Otherwise, the UE sends a type B CQI, where for specific definitions of the type A CQI and the type B CQI, reference may be made to definitions in the 3GPP Protocol 25.512, and details are not described herein again; the M_cqi and/or the N_cqi_type A are parameters sent by the network to the UE by using signaling; in addition, for other parameters in the formula, reference may be made to the description above, and details are not described herein again.

Time for the HS-SCCH to receive the CQI is:

$$((5*\text{CFN\_DRX} - \text{UE\_DTX\_DRX\_Offset} + \text{S\_DRX} + \left\lceil 1 - \frac{\left\lceil \frac{\Delta\tau_{\text{DRX}}}{2560} + 1.5 \right\rceil}{3} \right\rceil) \text{ MOD}$$

$$\text{UE\_DRX cycle}) = 0,$$

where

for specific definitions of the parameters in the formula, reference may be made to the foregoing corresponding parameters, and details are not described herein again.

In another type of embodiment, the network may inform the base station in which the non-reference cell locates of the offset (DRX_OFFSET) of discontinuous reception of the reference cell, where the DRX_OFFSET may be equal

to the $1 - \left\lceil \dfrac{\left\lceil \dfrac{\Delta\tau_{\text{DRX}}}{2560} + 1.5 \right\rceil}{3} \right\rceil$ but is not limited to $1 - \left\lceil \dfrac{\left\lceil \dfrac{\Delta\tau_{\text{DRX}}}{2560} + 1.5 \right\rceil}{3} \right\rceil$.

The base station in which the non-reference cell locates obtains the boundary of the HS-DPCCH by using a formula: 5*CFN_DRX+S_DRX+DRX_OFFSET, where
definitions of the CFN_DRX and the S_DRX are as illustrated above, and the CFN_DRX and the S_DRX are values of the non-reference cell before correction.

Time for the HS-DPCCH to send the CQI is:

$$((5*\text{CFN\_DRX} - \text{UE\_DTX\_DRX\_Offset} + \text{S\_DRX} + \text{DRX\_OFFSET}) \text{ MOD } k') = 0,$$

with $k' = k/(2ms)$,

where

the k' is the number of subframes that is corresponding to a DRX period, and other parameters in the formula are as illustrated above, and details are not described herein again.

Further, when MIMO is further configured on the network, and under a premise that the foregoing formulas are met, if the network further meets the following formula:

$$\left\lfloor \frac{5 \times \text{CFN\_DRX} - \text{UE\_DTX\_DRX\_Offset} + \text{S\_DRX} + \text{DRX\_\_OFFSET}}{k'} \right\rfloor \text{mod } M\_cqi < N\_cqi\_typeA$$

the UE needs to send the type A CQI. Otherwise, the UE sends the type B CQI, where the definitions of the type A CQI and the type B CQI have specific definitions in the 3GPP Protocol 25.512, and the parameters M_cqi and/or N_cqi_type A are sent by the network to the UE by using the signaling.

The time for the HS-SCCH to receive the CQI is:

$$((5*\text{CFN\_DRX} - \text{UE\_DTX\_DRX\_Offset} + \text{S\_DRX} + \text{DRX\_OFFSET}) \text{ MOD}$$

$$\text{UE\_DRX cycle}) = 0$$

In another type of embodiment, that the RNC in the network informs the base station in which the non-reference cell locates of a timing relationship (called an m value) between an uplink DPCCH of the reference cell and an uplink HS-DPCCH of the reference cell is used as an example; then, the base station in which the non-reference cell locates generates the boundary information of the HS-DPCCH according to the timing information relationship.

In this embodiment, the RNC first acquires the DRX timing information (that is, the $\Delta\tau_{\text{DRX}}$) of the reference cell from the reference cell; the acquiring manner may be the active requesting or the passive receiving, which is not limited in this embodiment. The DRX timing information is defined as the timing deviation between the F-DPCH and the HS-SCCH, and in this embodiment, the units of the $\tau_{DRX1}$, the $\tau_{DRX2}$, and the $\Delta\tau_{DRX}$ are all chip.

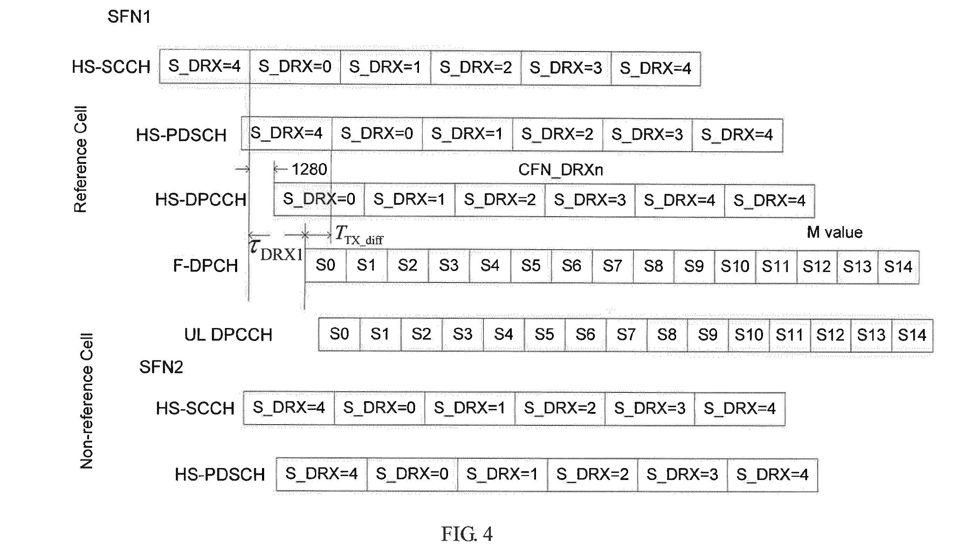

In this embodiment, the m value is a timing difference between an uplink DPCCH sending boundary corresponding to a downlink HS-SCCH subframe and an HS-DPCCH boundary that is fed back for the HS-SCCH, or may be understood as a timing difference between the uplink DPCCH and the HS-DPCCH that are sent for a piece of HS-SCCH data. The reference cell may find the boundary information of the HS-DPCCH according to the m value, and then detect carried information; details is shown in FIG. 4, and FIG. 4 is a diagram of an application example of another method for determining a data boundary by using DRX timing information according to an embodiment of the present invention.

In FIG. 4, the reference cell may find the $\tau_{DRX1}$ according to the m value so as to establish an association relationship between the HS-SCCH and the HS-DPCCH; the reference cell may inform the base station in which the non-reference cell locates of the m value, where the m value is the timing deviation between the uplink DPCCH and the HS-DPCCH; after learning the m value of the reference cell, the base station in which the non-reference cell locates may directly calculate the association relationship between the HS-SCCH and the HS-DPCCH; for example, in FIG. 4, the reference cell finds an HS-DPCCH S_DRX=0 corresponding to an HS-SCCH S_DRX=0; at this time, the m value learned by the base station in which the non-reference cell locates is 5 S_DRXs; at this time, the base station in which the non-reference cell locates may determine the S_DRX according to the acquired m value (-5); and at this time, it may be ensured that the base station in which the non-reference cell locates and the base station in which the non-reference cell locates have a consistent understanding.

A difference between the embodiment described in FIG. 4 and the embodiment described in FIG. 3 lies in that: the DRX timing information acquired by the base station in which the non-reference cell locates is different.

In this embodiment, the RNC informs the base station in which the non-reference cell locates of the m value of the reference cell; in this way, because the two cells detect same uplink DPCCH timing, the base station in which the non-reference cell locates may find the same boundary of the HS-DPCCH.

In another type of embodiment, based on the foregoing embodiment, the RNC in this embodiment may further inform the base station in which the non-reference cell locates of timing information of the F-DPCH of the reference cell and that of an HS-PDSCH of the reference cell, or the m difference information between the reference cell and the non-reference cell.

In a manner of informing the base station in which the non-reference cell locates of the timing information of the F-DPCH of the reference cell and that of the HS-PDSCH of the reference cell, because there is a unique conversion relationship between the timing information of the F-DPCH and the HS-PDSCH and the m value, correct m value information used to detect the boundary of the HS-DPCCH is finally computed.

In addition, in a manner of informing the base station in which the non-reference cell locates of the m difference information between the reference cell and the non-reference cell, the base station in which the non-reference cell locates performs computation by using the m value of itself and an m difference, for example, by using a formula: $256^*\Delta m=\Delta\tau_{DRX}$, and the correct m value information used to detect the boundary of the HS-DPCCH is finally computed.

That is, two solutions described in Embodiment 6 have an effect the same as an effect of determining by directly using the m value of the reference cell.

It may be known from the foregoing embodiment that in this embodiment of the present invention, the base station in which the non-reference cell locates is informed of the DRX timing information of the reference cell, or the parameter used to determine the boundary information of the HS-DPCCH, so that the base station in which the non-reference cell locates detects the boundary of the HS-DPCCH according to the DRX timing information or the parameter, thereby determining the boundary of the HS-DPCCH, and improving downlink data transmission performance. At the same time, it is also ensured that the base station in which the non-reference cell locates successfully receives uplink data in the multiflow transmission (Multiflow).

In addition, all the foregoing embodiments may be applicable to an inter-base station joint-scheduling feature in LTE-A, and an implementation process is similar to the foregoing embodiment. For details, reference may be made to the description above.

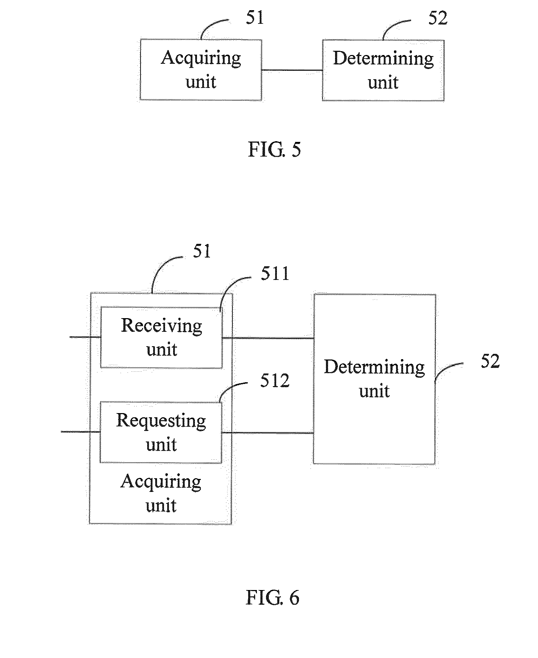

Based on the implementation process of the foregoing method, an embodiment of the present invention further provides a data boundary determining apparatus; a schematic structural diagram of the data boundary determining apparatus is shown in FIG. 5, and the apparatus includes an acquiring unit 51 and a determining unit 52, where the acquiring unit 51 is configured to acquire timing information of a reference cell, or a parameter used to determine boundary information of a high speed dedicated physical control channel (HS-DPCCH); and the determining unit 52 is configured to determine the boundary information of the HS-DPCCH according to the timing information of the reference cell or the parameter, where the boundary information of the HS-DPCCH may not only be used by a base station in which a non-reference cell locates to search for HS-DPCCH timing, but also may be used for downlink data transmission scheduling.

The acquiring unit 51 includes a receiving unit 511 and a requesting unit 512, and a schematic structural diagram of the acquiring unit 51 is shown in FIG. 6. FIG. 6 is a second schematic structural diagram of a data boundary determining apparatus according to an embodiment of the present invention.

The receiving unit 511 is configured to receive the timing information of the reference cell or the parameter used to determine the boundary information of the HS-DPCCH, which are sent by a network; and the requesting unit 512 is configured to send, to the network, a request for acquiring the timing information of the reference cell or the parameter used to determine the boundary information of the HS-DPCCH, and receive a response that includes the timing information of the reference cell or the parameter used to determine the boundary information of the HS-DPCCH, which are sent by the network.

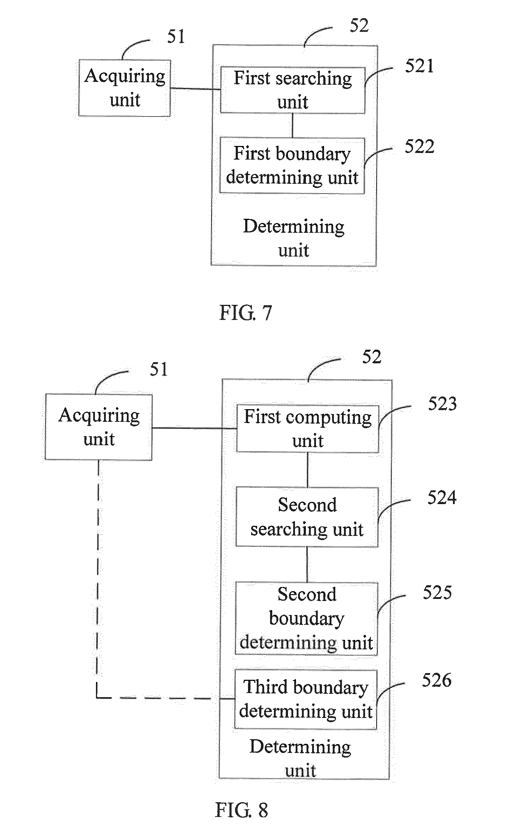

Optionally, based on the foregoing embodiment, when the parameter, which is acquired by the acquiring unit and used to determine the boundary information of the HS-DPCCH, includes downlink discontinuous reception (DRX) timing information of the reference cell, the determining unit 52 includes a first searching unit 521 and a first boundary determining unit 522; and a schematic structural diagram of the determining unit 52 is shown in FIG. 7. FIG. 7 is a third schematic structural diagram of a data boundary determining apparatus according to an embodiment of the present invention. FIG. 7 is based on the embodiment illustrated by FIG. 5.

The first searching unit 521 is configured to search for a boundary of an HS-SCCH according to an F-DPCH corresponding to $\tau_{DRX1}$ of the reference cell; and the first boundary determining unit 522 is configured to use the boundary of the HS-SCCH that has been found by the first searching unit 521 as a starting point, and determine boundary information of an HS-DPCCH that is closest in time of 1280 chips after a starting point of a CFN_DRX n subframe corresponding to the HS-SCCH as the boundary information of the HS-DPCCH.

Optionally, in the foregoing embodiment, the parameter used to determine the boundary information of the HS-DPCCH and acquired by the acquiring unit includes a DRX timing information difference $\Delta\tau_{DRX}$ between the reference cell and the non-reference cell; the determining unit 52 includes a first computing unit 523, a second searching unit 524, a second boundary determining unit 525, and/or a third boundary determining unit 526 (as shown in dashed lines in the figure); and a schematic structural diagram of the determining unit 52 is shown in FIG. 8. FIG. 8 is a fourth schematic structural diagram of a data boundary determining apparatus according to an embodiment of the present invention. That this embodiment is based on FIG. 5 is used as an example, where the first computing unit 523 is configured to perform computation according to the $\Delta\tau_{DRX}$ and DRX timing information $\tau_{DRX2}$ of the non-reference cell to obtain the DRX timing information $\tau_{DRX1}$ of the reference cell; the second searching unit 524 is configured to find boundary information of the HS-SCCH according to the F-DPCH corresponding to the $\tau_{DRX1}$ of the reference cell; the second boundary determining unit 525 is configured to use the boundary of the HS-SCCH that has been found by the second searching unit as a starting point, and determine the boundary information of the HS-DPCCH that is closest in time of the 1280 chips after the starting point of the CFN_DRX n subframe corresponding to the HS-SCCH as the boundary information of the HS-DPCCH; and the third boundary determining unit 526 is configured to obtain the boundary information of the HS-SCCH according to a formula $5*CFN\_DRX+S\_DRX+\left(1-\left\lceil\dfrac{\dfrac{\Delta\tau_{DRX}}{2560}+1.5}{3}\right\rceil\right)$, where the symbol $\lceil\ \rceil$ means to round up to a next integer, the CFN_DRX and the S_DRX both are values of an HS-DPCCH of the non-reference cell and/or that of an HS-SCCH of the non-reference cell before correction, and the $1-\left\lceil\dfrac{\dfrac{\Delta\tau_{DRX}}{2560}+1.5}{3}\right\rceil$ is a subframe offset of discontinuous reception.

Optionally, based on the foregoing embodiment, the parameter used to determine the boundary information of the HS-DPCCH and acquired by the acquiring unit includes an offset DRX_OFFSET of downlink discontinuous reception of the reference cell; and the determining unit is specifically configured to obtain the boundary information of the HS-DPCCH according to a formula 5*CFN_DRX+S_DRX+DRX_OFFSET, where the CFN_DRX is a connection frame number in a discontinuous reception state, the S_DRX is a subframe number in the discontinuous reception state, and the DRX_OFFSET is an offset of discontinuous reception.

Optionally, the parameter used to determine the boundary information of the HS-DPCCH and acquired by the acquiring unit includes a timing relationship between an uplink dedicated physical control channel DPCCH of the reference cell and an uplink HS-DPCCH of the reference cell, where the timing relationship between the uplink DPCCH and the uplink HS-DPCCH is: a timing difference between an uplink DPCCH sending boundary corresponding to a designated downlink HS-SCCH subframe and an HS-DPCCH boundary that is fed back for the HS-SCCH, or a timing difference between the uplink DPCCH and the HS-DPCCH that are sent for a piece of HS-SCCH data; and the determining unit is specifically configured to perform detection on the timing difference between the uplink DPCCH sending boundary corresponding to the designated downlink HS-SCCH subframe and the HS-DPCCH boundary that is fed back for the HS-SCCH, or the timing difference between the uplink DPCCH and the HS-DPCCH that are sent for a piece of HS-SCCH data to obtain the boundary information of the HS-DPCCH.

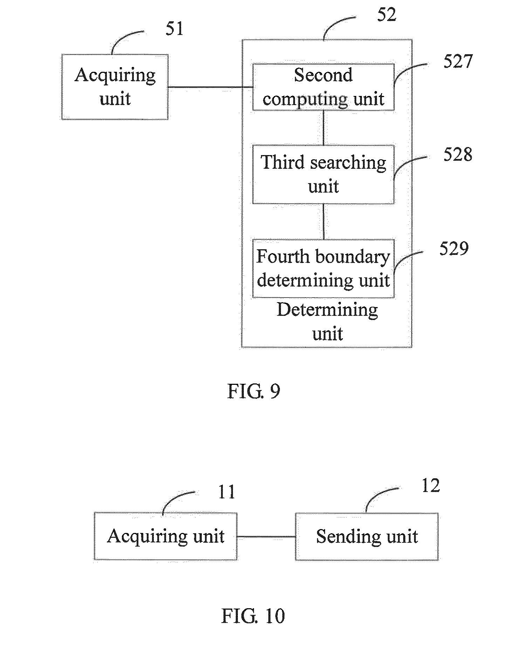

Optionally, the parameter, which is acquired by the acquiring unit and used to determine the boundary information of the HS-DPCCH, includes m difference information $\Delta m$ between the reference cell and the non-reference cell; the determining unit includes a second computing unit 527, a third searching unit 528, and a fourth boundary determining unit 529; and a schematic structural diagram is shown in FIG. 9. FIG. 9 is a fifth schematic structural diagram of a data boundary determining apparatus according to an embodiment of the present invention. The second computing unit 527 is configured to obtain the $\tau_{DRX1}$ of the reference cell according to formulas $256 * \Delta m = \Delta \tau_{DRX}$ and $\Delta \tau_{DRX} = \tau_{DRX2}$ of the non-reference cell- $\tau_{DRX1}$ of the reference cell; the third searching unit 528 is configured to find the boundary information of the HS-SCCH according to the F-DPCH corresponding to the $\tau_{DRX1}$ of the reference cell; and the fourth boundary determining unit 529 is configured to use the boundary of the HS-SCCH that has been found by the third searching unit as a starting point, and determine the boundary information of the HS-DPCCH that is closest in time of the 1280 chips after the starting point of the CFN_DRX n subframe corresponding to the HS-SCCH as the boundary information of the HS-DPCCH.

In this embodiment, the first computing unit and the second computing unit may be integrated together, and may also be independently deployed; the first searching unit, the second searching unit, and the third searching unit may be integrated together, and may also be independently deployed; the first boundary determining unit, the second boundary determining unit, the third boundary determining unit, and the fourth boundary determining unit may be integrated together, and may also be independently deployed, which is not limited in this embodiment.

For a specific implementation process of functions and roles of each unit in the apparatus, reference may be made to a corresponding implementation process in the foregoing method, and details are not described herein again.

The data boundary determining apparatus may be integrated in a base station that serves a user equipment, and may also be independently deployed in the network, which is not limited in this embodiment.

Accordingly, an embodiment of the present invention further provides an indication information sending apparatus; and a schematic structural diagram of the indication information sending apparatus is shown in FIG. 10. The apparatus includes an acquiring unit 11 and a sending unit 12, where the acquiring unit 11 is configured to acquire timing information of a reference cell, or acquire a parameter used to determine boundary information of a high speed dedicated physical control channel (HS-DPCCH); and the sending unit 12 is configured to send the timing information of the reference cell or the parameter used to determine the boundary information of the high speed dedicated physical control channel (HS-DPCCH) to a base station in which a non-reference cell locates.

The acquiring unit includes a receiving unit and/or a requesting unit, where the receiving unit is configured to receive the timing information of the reference cell, or the parameter used to determine the boundary information of the high speed dedicated physical control channel HS-DPCCH, which are sent by a network; and the requesting unit is configured to send, to the base station in which the reference cell locates, a request for acquiring the timing information of the reference cell or the parameter used to determine the boundary information of the high speed dedicated physical control channel (HS-DPCCH); and receive a response that includes the timing information of the reference cell or the parameter used to determine the boundary information of the HS-DPCCH, which are sent by the reference cell.

The timing information of the reference cell that is acquired by the acquiring unit includes discontinuous reception DRX timing information of the reference cell and/or a timing relationship between an uplink dedicated physical control channel DPCCH of the reference cell and an uplink HS-DPCCH of the reference cell.

The parameter used to determine the boundary information of the high speed dedicated physical control channel (HS-DPCCH) and acquired by the acquiring unit includes the discontinuous reception DRX timing information of the reference cell, where the DRX timing information is a timing deviation between a fractional dedicated physical channel (F-DPCH) and a high speed shared control channel (HS-SCCH), a DRX timing information difference $\Delta \tau_{DRX}$ between the reference cell and the non-reference cell, an offset DRX_OFFSET of discontinuous reception of the reference cell, and/or m difference information $\Delta m$ between the reference cell and the non-reference cell.

The offset DRX_OFFSET of discontinuous reception of the reference cell is obtained by the network through computation by using a formula $1 - \left\lceil \dfrac{\frac{\Delta \tau_{DRX}}{2560} + 1.5}{3} \right\rceil$, where the $\Delta \tau_{DRX}$ is the DRX timing information difference between the reference cell and the non-reference cell.

For a specific implementation process of functions and roles of each unit in the apparatus, reference may be made to a corresponding implementation process in the foregoing method, and details are not described herein again.

The indication information sending apparatus may be integrated in an RNC in the network, and may also be independently deployed in the network, which is not limited in this embodiment.

It should be noted that in the specification, relational terms such as first and second are used only to differentiate an entity or operation from another entity or operation, and do not require or imply that any actual relationship or sequence exists between these entities or operations. Moreover, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

Based on the foregoing descriptions of the embodiments, persons skilled in the art may clearly understand that the present invention may be implemented by software in addition to a necessary universal hardware platform or by hardware only. In most circumstances, the former is a preferred implementation. Based on such an understanding, the technical solutions of the present invention essentially or the part contributing to the prior art may be implemented in a form of a software product. The software product is stored in a readable storage medium, such as a ROM/RAM, a magnetic disk, or an optical disc, and includes several instructions for instructing a computer device (which may be a personal computer, a server, or a network device) to perform the methods described in the embodiments of the present invention.

It may be clearly understood by persons skilled in the art that, for the purpose of convenient and brief description, division of the foregoing functional modules is merely used as an example, and the foregoing functions may be assigned to different functional modules according to an actual need, that is, an internal structure of the apparatus is divided into different functional modules, to complete all or a part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. Furthermore, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present application other than limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present application.

**Claims**

1. A data boundary determining method, comprising:

   acquiring, by a base station in which a non-reference cell locates, timing information of a reference cell, or acquiring, by a base station in which the non-reference cell locates, a parameter used to determine boundary information of a high speed dedicated physical control channel (HS-DPCCH); and
   determining, by the base station, the boundary information of the HS-DPCCH according to the timing information of the reference cell or the parameter.

2. The method according to claim 1, wherein the acquiring, by the base station, the timing information of the reference cell, or the acquiring, by the base station, the parameter used to determine the boundary information of the HS-DPCCH specifically comprises:

   receiving, by the base station, the timing information of the reference cell sent by a network, or acquiring, by the base station, the parameter used to determine the boundary information of the HS-DPCCH; or
   sending, by the base station to the network, a request for acquiring the timing information of the reference cell or receiving the parameter that is sent by the network and used to determine the boundary information of the HS-DPCCH; and receiving, by the base station, a response that comprises the timing information of the reference cell or the parameter used to determine the boundary information of the HS-DPCCH, which are sent by the network.

3. The method according to claim 1 or 2, wherein the timing information of the reference cell comprises: discontinuous reception DRX timing information $\tau_{DRX1}$ of the reference cell, and the $\tau_{DRX1}$ is a timing deviation between a fractional dedicated physical channel (F-DPCH) and a high speed shared control channel (HS-SCCH);
   the determining, by the base station, the boundary information of the HS-DPCCH according to the timing information of the reference cell specifically comprises:

   searching, by the base station, for a boundary of the HS-SCCH according to an F-DPCH corresponding to the $\tau_{DRX1}$ of the reference cell; and
   using, by the base station, the found boundary of the HS-SCCH as a starting point, and determining, by the base station, boundary information of an HS-DPCCH that is closest in time of 1280 chips after a starting point of a CFN_DRX n subframe corresponding to the HS-SCCH as the boundary information of the HS-DPCCH.

4. The method according to claim 1 or 2, wherein the parameter used to determine the boundary information of the HS-DPCCH comprises: a DRX timing information difference $\Delta\tau_{DRX}$ between the reference cell and the non-reference cell;
   the determining, by the base station, the boundary information of the HS-DPCCH according to the parameter specifically comprises:

   performing, by the base station, computation according to the $\Delta\tau_{DRX}$ and DRX timing information $\tau_{DRX2}$ of itself to obtain DRX timing information $\tau_{DRX1}$ of the reference cell; finding, by the base station, boundary information of an HS-SCCH according to an F-DPCH corresponding to the $\tau_{DRX1}$ of the reference cell; and using, by the base station, a found boundary of the HS-SCCH as a starting point, and determining, by the base station, boundary information of an HS-DPCCH that is closest in time of 1280 chips after a starting point of a CFN_DRX n subframe corresponding to the HS-SCCH as the boundary information of the HS-DPCCH;
   or

   obtaining, by the base station, the boundary information of the HS-DPCCH and/or that of the HS-SCCH according to a formula $5*CFN\_DRX + S\_DRX + \left(1 - \left\lceil \dfrac{\dfrac{\Delta\tau_{DRX}}{2560} + 1.5}{3} \right\rceil\right)$, wherein the symbol $\lceil\ \rceil$ means to round

   up to a next integer, the CFN_DRX and the S_DRX both are values of an HS-DPCCH of the non-reference cell and/or that of an HS-SCCH of the non-reference cell before correction, the CFN_DRX is a connection frame number in a discontinuous reception state, the S_DRX is a subframe number in the discontinuous reception state, and the $1 - \left\lceil \dfrac{\dfrac{\Delta\tau_{DRX}}{2560} + 1.5}{3} \right\rceil$ is a subframe offset of discontinuous reception.

5. The method according to claim 1 or 2, wherein the parameter used to determine the boundary information of the HS-DPCCH comprises: an offset DRX_OFFSET of discontinuous reception of the reference cell; the determining, by the base station, the boundary information of the HS-DPCCH according to the parameter specifically comprises:

   obtaining, by the base station, the boundary information of the HS-DPCCH according to a formula 5*CFN_DRX+S_DRX+DRX_OFFSET, wherein the CFN_DRX is a connection frame number in a discontinuous reception state, the S_DRX is a subframe number in the discontinuous reception state, and the DRX_OFFSET is the offset of discontinuous reception.

6. The method according to claim 1 or 2, wherein the parameter, which is used to determine the boundary information of the HS-DPCCH, of the reference cell comprises: a timing relationship between an uplink dedicated physical control channel DPCCH of the reference cell and an uplink HS-DPCCH of the reference cell, and the timing relationship between the uplink DPCCH and the uplink HS-DPCCH is: a timing difference between an uplink DPCCH sending boundary corresponding to a designated downlink HS-SCCH subframe and an HS-DPCCH boundary that is fed back for the HS-SCCH, or a timing difference between the uplink DPCCH and the HS-DPCCH that are sent for a piece of HS-SCCH data; and the determining, by the base station, the boundary information of the HS-DPCCH according to the parameter specifically comprises:

   performing, by the base station, detection on the timing difference between the uplink DPCCH sending boundary corresponding to the designated downlink HS-SCCH subframe and the HS-DPCCH boundary that is fed back for the HS-SCCH, or on the timing difference between the uplink DPCCH and the HS-DPCCH that are sent for a piece of HS-SCCH data to obtain the boundary information of the HS-DPCCH.

7. The method according to claim 1 or 2, wherein the parameter used to determine the boundary information of the HS-DPCCH comprises: m difference information $\Delta m$ between the reference cell and the non-reference cell; the determining, by the base station, the boundary information of the HS-DPCCH according to the parameter specifically comprises:

   obtaining, by the base station, $\tau_{DRX1}$ of the reference cell according to formulas $256*\Delta m = \Delta\tau_{DRX}$ and $\Delta\tau_{DRX} = \tau_{DRX2}$ of the non-reference cell- $\tau_{DRX1}$ of the reference cell; finding, by the base station, boundary information of an HS-SCCH according to an F-DPCH corresponding to the $\tau_{DRX1}$ of the reference cell; and using, by the base station, a found boundary of the HS-SCCH as a starting point, and determining, by the base station, boundary information of an HS-DPCCH that is closest in time of 1280 chips after a starting point of a CFN_DRX n subframe corresponding to the HS-SCCH as the boundary information of the HS-DPCCH.

8. An indication information sending method, comprising:

   acquiring timing information of a reference cell, or a parameter used to determine boundary information of a high speed dedicated physical control channel (HS-DPCCH); and sending the timing information of the reference cell, or the parameter used to determine the boundary information of the high speed dedicated physical control channel (HS-DPCCH) to a base station in which a non-reference cell locates, so that the base station in which the non-reference cell locates determines the boundary information of the HS-DPCCH.

9. The method according to claim 8, wherein the acquiring the timing information of the reference cell, or the parameter used to determine the boundary information of the high speed dedicated physical control channel (HS-DPCCH) comprises:

when a network configures multiflow transmission for a user equipment, receiving, by the network, the timing information or the parameter used to determine the boundary information of the high speed dedicated physical control channel (HS-DPCCH), which are sent by a base station in which the reference cell locates; or sending, by the network to the base station in which the reference cell locates, a request for acquiring the timing information of the reference cell or the parameter used to determine boundary information of the high speed dedicated physical control channel (HS-DPCCH); and receiving, by the network, a response that comprises the timing information of the reference cell or the parameter used to determine the boundary information of the high speed dedicated physical control channel (HS-DPCCH), which are sent by the base station in which the reference cell locates.

10. The method according to claim 8 or 9, wherein
the timing information of the reference cell comprises: discontinuous reception DRX timing information;
the parameter used to determine the boundary information of the HS-DPCCH comprises at least one of the following: a DRX timing information difference $\Delta\tau_{DRX}$ between the reference cell and the non-reference cell; or an offset DRX_OFFSET of discontinuous reception of the reference cell; or a timing relationship between an uplink dedicated physical control channel DPCCH of the reference cell and an uplink HS-DPCCH of the reference cell; or m difference information $\Delta m$ between the reference cell and the non-reference cell.

11. The method according to claim 8 or 9, wherein the offset DRX_OFFSET of discontinuous reception of the reference cell is obtained by the network through computation by using a formula $1 - \left\lceil \dfrac{\dfrac{\Delta\tau_{DRX}}{2560} + 1.5}{3} \right\rceil$ and the $\Delta\tau_{DRX}$ is a DRX timing information difference between the reference cell and the non-reference cell.

12. A data boundary determining apparatus, comprising:

an acquiring unit, configured to acquire timing information of a reference cell, or a parameter used to determine boundary information of a high speed dedicated physical control channel (HS-DPCCH); and
a determining unit, configured to determine the boundary information of the HS-DPCCH according to the timing information of the reference cell or the parameter.

13. The apparatus according to claim 12, wherein the acquiring unit comprises:

the receiving unit, configured to receive the timing information of the reference cell or the parameter used to determine the boundary information of the HS-DPCCH, which are sent by the network; and
the requesting unit, configured to send, to the network, a request for acquiring the timing information of the reference cell or the parameter used to determine the boundary information of the HS-DPCCH; and receive a response that comprises the timing information of the reference cell or the parameter used to determine the boundary information of the HS-DPCCH, which are sent by the network.

14. The apparatus according to claim 12 or 13, wherein when the parameter, which is acquired by the acquiring unit and used to determine the boundary information of the HS-DPCCH, comprises downlink discontinuous reception (DRX) timing information of the reference cell,
the determining unit comprises:

a first searching unit, configured to search for a boundary of an HS-SCCH according to an F-DPCH corresponding to $\tau_{DRX1}$ of the reference cell; and
a first boundary determining unit, configured to use the boundary of the HS-SCCH found by the first searching unit as a starting point, and determine boundary information of an HS-DPCCH that is closest in time of 1280 chips after a starting point of a CFN_DRX n subframe corresponding to the HS-SCCH as the boundary information of the HS-DPCCH.

15. The apparatus according to claim 12 or 13, wherein the parameter, which is acquired by the acquiring unit and used to determine the boundary information of the HS-DPCCH, comprises a DRX timing information difference $\Delta\tau_{DRX}$ between the reference cell and a non-reference cell;

the determining unit comprises: a first computing unit, a second searching unit, a second boundary determining unit, and/or a third boundary unit, wherein

the first computing unit is configured to perform computation according to the $\Delta\tau_{DRX}$ and DRX timing information $\tau_{DRX2}$ of the non-reference cell to obtain DRX timing information $\tau_{DRX1}$ of the reference cell;

the second searching unit is configured to find boundary information of an HS-SCCH according to an F-DPCH corresponding to the $\tau_{DRX1}$ of the reference cell;

the second boundary determining unit is configured to use a boundary of the HS-SCCH that has been found by the second searching unit as a starting point, and determine boundary information of an HS-DPCCH that is closest in time of 1280 chips after a starting point of a CFN_DRX n subframe corresponding to the HS-SCCH as the boundary information of the HS-DPCCH; and

the third boundary determining unit is configured to obtain the boundary information of the HS-SCCH according to a formula $5*CFN\_DRX+ S\_DRX+ \left\lceil 1 - \left\lceil \dfrac{\frac{\Delta\tau_{DRX}}{2560}+1.5}{3} \right\rceil \right\rceil$ wherein the symbol $\lceil\ \rceil$ means to round up to a next integer, the CFN_DRX and the S_DRX both are values of an HS-DPCCH of the non-reference cell and/or that of an HS-SCCH of the non-reference cell before correction, the CFN_DRX is a connection frame number in a discontinuous reception state, the S_DRX is a subframe number in the discontinuous reception state, and the

$1 - \left\lceil \dfrac{\frac{\Delta\tau_{DRX}}{2560}+1.5}{3} \right\rceil$ is a subframe offset of discontinuous reception.

16. The apparatus according to claim 12 or 13, wherein the parameter, which is acquired by the acquiring unit and used to determine the boundary information of the HS-DPCCH, comprises an offset DRX_OFFSET of downlink discontinuous reception of the reference cell; and

the determining unit is specifically configured to obtain the boundary information of the HS-DPCCH according to a formula 5*CFN_DRX+ S_DRX+DRX_OFFSET, wherein the CFN_DRX is a connection frame number in a discontinuous reception state, the S_DRX is a subframe number in the discontinuous reception state, and the DRX_OFFSET is an offset of discontinuous reception.

17. The apparatus according to claim 12 or 13, wherein the parameter, which is acquired by the acquiring unit and used to determine the boundary information of the HS-DPCCH, comprises a timing relationship between an uplink dedicated physical control channel DPCCH of the reference cell and an uplink HS-DPCCH of the reference cell, and the timing relationship between the uplink DPCCH and the uplink HS-DPCCH is: a timing difference between an uplink DPCCH sending boundary corresponding to a designated downlink HS-SCCH subframe and an HS-DPCCH boundary that is fed back for the HS-SCCH, or a timing difference between the uplink DPCCH and the HS-DPCCH that are sent for a piece of HS-SCCH data; and

the determining unit is specifically configured to perform detection on the timing difference between the uplink DPCCH sending boundary corresponding to the designated downlink HS-SCCH subframe and the HS-DPCCH boundary that is fed back for the HS-SCCH, or the timing difference between the uplink DPCCH and the HS-DPCCH that are sent for a piece of HS-SCCH data to obtain the boundary information of the HS-DPCCH.

18. The apparatus according to claim 12 or 13, wherein the parameter, which is acquired by the acquiring unit and used to determine the boundary information of the HS-DPCCH, comprises m difference information $\Delta m$ between the reference cell and a non-reference cell;

the determining unit comprises:

a second computing unit, configured to obtain $\tau_{DRX1}$ of the reference cell according to formulas $256*\Delta m=\Delta\tau_{DRX}$ and $\Delta\tau_{DRX}=\tau_{DRX2}$ of the non-reference cell- $\tau_{DRX1}$ of the reference cell;

a third searching unit, configured to find boundary information of an HS-SCCH according to an F-DPCH corre-

sponding to the $\tau_{DRX1}$ of the reference cell; and
a fourth boundary determining unit, configured to use a boundary of the HS-SCCH found by the third searching unit as a starting point, and determine boundary information of an HS-DPCCH that is closest in time of 1280 chips after a starting point of a CFN_DRX n subframe corresponding to the HS-SCCH as the boundary information of the HS-DPCCH.

19. An indication information sending apparatus, comprising:

an acquiring unit, configured to acquire timing information of a reference cell, or a parameter used to determine boundary information of a high speed dedicated physical control channel (HS-DPCCH); and
a sending unit, configured to send the timing information of the reference cell or the parameter used to determine the boundary information of the high speed dedicated physical control channel (HS-DPCCH) to a base station in which a non-reference cell locates.

20. The apparatus according to claim 19, wherein the acquiring unit comprises:

a receiving unit, configured to receive, when multiflow transmission is configured for a user equipment, the timing information or the parameter used to determine the boundary information of the high speed dedicated physical control channel (HS-DPCCH), which are sent by the base station in which the reference cell locates; and/or
a requesting unit, configured to send, to the base station in which the reference cell locates, a request for acquiring the timing information of the reference cell or the parameter used to determine the boundary information of the high speed dedicated physical control channel (HS-DPCCH); and receive a response that comprises the timing information of the reference cell or the parameter used to determine the boundary information of the high speed dedicated physical control channel (HS-DPCCH), which are sent by the base station in which the reference cell locates.

21. The apparatus according to claim 19 or 20, wherein
the timing information of the reference cell that is acquired by the acquiring unit comprises: discontinuous reception DRX timing information of the reference cell and/or a timing relationship between an uplink dedicated physical control channel DPCCH of the reference cell and an uplink HS-DPCCH of the reference cell; and
the parameter, which is acquired by the acquiring unit and used to determine the boundary information of the high speed dedicated physical control channel (HS-DPCCH), comprises the discontinuous reception DRX timing information of the reference cell, wherein the DRX timing information is a timing deviation between a fractional dedicated physical channel (F-DPCH) and a high speed shared control channel (HS-SCCH), a DRX timing information difference $\Delta\tau_{DRX}$ between the reference cell and the non-reference cell, an offset DRX_OFFSET of discontinuous reception of the reference cell, and/or m difference information $\Delta m$ between the reference cell and the non-reference cell.

A base station in which a non-reference cell locates acquires timing information of a reference cell, or acquires a parameter used to determine boundary information of a high speed dedicated physical control channel HS-DPCCH — 101

The base station determines the boundary information of the HS-DPCCH according to the timing information of the reference cell or the parameter — 102

FIG. 1

Acquire timing information of a reference cell, or acquire a parameter used to determine boundary information of a high speed dedicated physical control channel HS-DPCCH — 201

Send the timing information of the reference cell, or the parameter used to determine the boundary information of the high speed dedicated physical control channel HS-DPCCH to the base station in which the non-reference cell locates, so that a base station in which the non-reference cell locates determines the boundary information of the HS-DPCCH — 202

FIG. 2

EP 2 840 843 A1

SFN1

Reference Cell

HS-SCCH | S_DRX=4 | S_DRX=0 | S_DRX=1 | S_DRX=2 | S_DRX=3 | S_DRX=4

HS-PDSCH | S_DRX=4 | S_DRX=0 | S_DRX=1 | S_DRX=2 | S_DRX=3 | S_DRX=4

1280     CFN_DRXn

HS-DPCCH | S_DRX=0 | S_DRX=1 | S_DRX=2 | S_DRX=3 | S_DRX=4 | S_DRX=4

$\tau_{DRX1}$

F-DPCH | S0 | S1 | S2 | S3 | S4 | S5 | S6 | S7 | S8 | S9 | S10 | S11 | S12 | S13 | S14

$\tau_{DRX2}$

SFN2

$\Delta\tau_{DRX}$

Non-reference Cell

HS-SCCH | S_DRX=4 | S_DRX=0 | S_DRX=1 | S_DRX=2 | S_DRX=3 | S_DRX=4

HS-PDSCH | S_DRX=4 | S_DRX=0 | S_DRX=1 | S_DRX=2 | S_DRX=3 | S_DRX=4

FIG. 3

EP 2 840 843 A1

SFN1

**Reference Cell**

HS-SCCH | S_DRX=4 | S_DRX=0 | S_DRX=1 | S_DRX=2 | S_DRX=3 | S_DRX=4 |

HS-PDSCH | S_DRX=4 | S_DRX=0 | S_DRX=1 | S_DRX=2 | S_DRX=3 | S_DRX=4 |

← 1280    CFN_DRXn

HS-DPCCH | S_DRX=0 | S_DRX=1 | S_DRX=2 | S_DRX=3 | S_DRX=4 | S_DRX=4 |

$T_{TX\_diff}$    M value

$\tau_{DRX1}$

F-DPCH | S0 | S1 | S2 | S3 | S4 | S5 | S6 | S7 | S8 | S9 | S10 | S11 | S12 | S13 | S14 |

UL DPCCH | S0 | S1 | S2 | S3 | S4 | S5 | S6 | S7 | S8 | S9 | S10 | S11 | S12 | S13 | S14 |

**Non-reference Cell**

SFN2

HS-SCCH | S_DRX=4 | S_DRX=0 | S_DRX=1 | S_DRX=2 | S_DRX=3 | S_DRX=4 |

HS-PDSCH | S_DRX=4 | S_DRX=0 | S_DRX=1 | S_DRX=2 | S_DRX=3 | S_DRX=4 |

FIG. 4

51

52

| Acquiring unit | Determining unit |

FIG. 5

51

511

| Receiving unit |

512

| Requesting unit |

Acquiring unit

| Determining unit | 52

FIG. 6

51

Acquiring
unit

52

First searching
unit  —— 521

First boundary
determining unit  —— 522

Determining
unit

FIG. 7

51

Acquiring
unit

52

First computing
unit  —— 523

Second
searching unit  —— 524

Second
boundary
determining unit  —— 525

Third boundary
determining unit  —— 526

Determining
unit

FIG. 8

| 51 | 52 |
|---|---|

Acquiring unit

Second computing unit — 527

Third searching unit — 528

Fourth boundary determining unit — 529

Determining unit

FIG. 9

| 11 | 12 |
|---|---|

Acquiring unit — Sending unit

FIG. 10

# INTERNATIONAL SEARCH REPORT

| International application No. |
|---|
| **PCT/CN2013/071311** |

### A. CLASSIFICATION OF SUBJECT MATTER

H04W 56/00 (2009.01) i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNABS, CNTXT, CNKI: timing, synchronization, boundary, HS-DPCCH, High speed dedicated physical control channel, single frequency dual w cell, SFDC, multiflow, primary serving cell, secondary serving cell, primary cell, secondary cell

WPI, EPODOC, VEN: timing, synchroni+, boundary, HS-DPCCH, SFDC, single w frequency w dual w cell, multiflow, primary, secondary

### C. DOCUMENTS CONSIDERED TO BE RELEVANT

| Category* | Citation of document, with indication, where appropriate, of the relevant passages | Relevant to claim No. |
|---|---|---|
| E | CN 102984794 A (ZTE CORP.), 20 March 2013 (20.03.2013), description, paragraphs [0098]-[0146] | 1, 8, 12, 19 |
| A | US 2012069798 A1 (QUALCOMM INC.), 22 March 2012 (22.03.2012), the whole document | 1-21 |
| A | CN 102118801 A (ACADEMY OF TELECOMMUNICATION TECHNOLOGY), 06 July 2011 (06.07.2011), the whole document | 1-21 |
| A | WO 2011057296 A2 (QUALCOMM INC.), 12 May 2011 (12.05.2011), the whole document | 1-21 |
| A | US 2011243104 A1 (SWARTS, F. et al.), 06 October 2011 (06.10.2011), the whole document | 1-21 |
| A | US 2012076021 A1 (QUALCOMM INC.), 29 March 2012 (29.03.2012), the whole document | 1-21 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 April 2013 (28.04.2013) | **09 May 2013 (09.05.2013)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>        **WU, Weimin**<br>Telephone No.: (86-10) **62411444** |

Form PCT/ISA/210 (second sheet) (July 2009)

## INTERNATIONAL SEARCH REPORT
### Information on patent family members

| | International application No. |
|---|---|
| | **PCT/CN2013/071311** |

| Patent Documents referred in the Report | Publication Date | Patent Family | Publication Date |
|---|---|---|---|
| CN 102984794 A | 20.03.2013 | WO 2013034017 A1 | 14.03.2013 |
| US 2012069798 A1 | 22.03.2012 | WO 2012024331 A1 | 23.02.2012 |
| CN 102118801 A | 06.07.2011 | WO 2012130055 A1 | 04.10.2012 |
| WO 2011057296 A2 | 12.05.2011 | CA 2778642 A1 | 12.05.2011 |
| | | KR 20120091318 A | 17.08.2012 |
| | | TW 201141170 A | 16.11.2011 |
| | | JP 2013510520 W | 21.03.2013 |
| | | US 2011110239 A1 | 12.05.2011 |
| | | CN 102598571 A | 18.07.2012 |
| | | EP 2499768 A2 | 19.09.2012 |
| | | ZA 201204232 A | 27.02.2013 |
| | | WO 2011057296 A3 | 30.06.2011 |
| US 2011243104 A1 | 06.10.2011 | None | |
| US 2012076021 A1 | 29.03.2012 | WO 2012034035 A1 | 15.03.2012 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210144267